# FASCICULE DE BREVET EUROPEEN

(11) **EP 1 351 417 B1**
(45) Date de publication et mention de la délivrance du brevet: **19.01.2005**
(21) Numéro de dépôt: 03290793.3
(22) Date de dépôt: 28.03.2003
(51) Int. Cl.: H04B 10/18, G02B 6/16

(54) **Fibre de compensation de dispersion utilisant un mode d'ordre supérieur**
Dispersionskompensationsfaser unter Verwendung von Moden höherer Ordnung
Dispersion-compensation fiber using higher order mode

(30) Priorité: 05.04.2002 FR 0204271
(43) Date de publication de la demande: 08.10.2003
(73) Titulaire: ALCATEL, 75008 Paris (FR)
(72) Inventeur: Sillard, Pierre, 78150 Le Chesnay (FR); Expert, Lionel, 75017 Paris (FR); Nouchi, Pascale, 78600 Maisons-Lafitte (FR)
(74) Mandataire: Blokland, Arie

(56) Documents cités:
- US-A1- 2002 012 510
- GOEL A ET AL: "WIDE-BAND DISPERSION COMPENSATINGOPTICAL FIBER" IEEE PHOTONICS TECHNOLOGY LETTERS, IEEE INC. NEW YORK, US, vol. 8, no. 12, 1 décembre 1996 (1996-12-01), pages 1668-1670, XP000679544 ISSN: 1041-1135
- GNAUCK A H ET AL: "Dispersion and dispersion-slope compensation of NZDSF over the entire C band using higher-order-mode fibre" ELECTRONICS LETTERS, IEE STEVENAGE, GB, vol. 36, no. 23, 9 novembre 2000 (2000-11-09), pages 1946-1947, XP006015890 ISSN: 0013-5194
- EGUCHI M ET AL: "DISPERSION COMPENSATION BASED ON DUAL-MODE OPTICAL FIBRE WITH INHOMOGENEOUS PROFILE CORE" JOURNAL OF LIGHTWAVE TECHNOLOGY, IEEE. NEW YORK, US, vol. 14, no. 10, 1 octobre 1996 (1996-10-01), pages 2387-2394, XP000631544 ISSN: 0733-8724

## Description

L'invention concerne le domaine des fibres optiques à compensation de dispersion pour système de transmission à multiplexage en longueur d'onde. La fibre optique à compensation de dispersion a pour fonction de compenser la dispersion chromatique d'une fibre dite de ligne.

Selon un premier art antérieur, il est connu d'associer certains types de fibres optiques à dispersion décalée réduisant les effets non-linéaires croisés (« non-zéro dispersion shifted fiber » en terminologie anglo-saxonne correspondant au sigle NZ-DSF) à des fibres de compensation de dispersion (« dispersion compensating fiber » en terminologie anglo-saxonne correspondant au sigle DCF), ce qui permet d'obtenir une ligne de transmission dont la dispersion est nulle sur un grand intervalle spectral. Un inconvénient de cette association de fibres à dispersion décalée et de fibres de compensation de dispersion dites classiques réside dans les fortes pertes que présente la fibre de compensation de dispersion, notamment l'atténuation linéique et les pertes par courbure.

Selon un deuxième art antérieur, il est connu d'utiliser une fibre optique à gestion de dispersion (« Dispersion Managed Fiber" en terminologie anglo-saxonne correspondant au sigle DMF) présentant une alternance longitudinale de portions de fibre optique à dispersion chromatique positive et de portions de fibre optique à dispersion chromatique négative. La dispersion chromatique pour l'ensemble de la fibre optique à gestion de dispersion est ainsi aisément compensée pour une longueur d'onde donnée. Par contre, lorsque la plage spectrale d'utilisation de la fibre optique à gestion de dispersion augmente, la dispersion chromatique doit être compensée sur une plage spectrale importante, c'est-à-dire que la pente de dispersion chromatique doit également être compensée, cette compensation de pente de dispersion chromatique étant en pratique nettement plus difficile à réaliser et s'accompagnant souvent d'une dégradation de certains autres paramètres de la fibre optique à gestion de dispersion comme notamment sa surface effective. De plus la fibre optique à gestion de dispersion doit remplacer à la fois la fibre optique de ligne et la fibre optique à compensation de dispersion associée, elle ne peut pas être simplement associée à une fibre optique de ligne existante.

Selon un troisième art antérieur, il est connu d'utiliser une fibre optique à compensation de dispersion dans un mode d'ordre supérieur (« higher-order mode » en terminologie anglo-saxonne correspondant au sigle HOM). Ce type de fibre optique a plusieurs intérêts dont d'une part celui d'avoir une surface effective nettement plus élevée que les fibres optiques à compensation de dispersion classiques, et de nécessiter moins de longueur de fibre que les fibres optiques à compensation de dispersion classiques pour compenser une fibre optique de ligne donnée grâce à des valeurs négatives très basses de dispersion chromatique, tout en gardant une atténuation linéique équivalente.

Un quatrième art antérieur est décrit dans US2002/0012510 (Jiang).

Toutefois, l'invention est basée sur la constatation que l'allure des courbes de dispersion chromatique obtenues, présentant une longueur d'onde de dispersion chromatique minimale dans la plage spectrale de fonctionnement ou au voisinage de la plage spectrale de fonctionnement, ne permet pas une bonne compensation de la pente de dispersion chromatique, ce qui devient rédhibitoire pour le système de transmission lorsque le débit augmente de manière importante. La longueur d'onde de dispersion chromatique minimale est la longueur d'onde correspondant à un minimum global de dispersion chromatique.

La solution proposée par l'invention est donc basée sur l'obtention de courbes de dispersion chromatique pour lesquelles la longueur d'onde de dispersion chromatique minimale est éloignée de la plage spectrale de fonctionnement, ce qui rend possible l'obtention d'une courbe de dispersion chromatique à peu près rectiligne dans la plage spectrale de fonctionnement considérée, ce qui permet alors de compenser de manière efficace, même en cas de débit élevé, la dispersion chromatique de la fibre optique de ligne dont la pente de dispersion est quant à elle pratiquement constante.

Selon l'invention, il est prévu une fibre optique à compensation de dispersion, pour système de transmission à multiplexage en longueur d'onde, comportant successivement du centre vers la périphérie un coeur présentant un profil d'indice variable puis une gaine d'indice constant, permettant la propagation, pour une plage spectrale de fonctionnement donnée supérieure à 30nm, en plus du mode fondamental LP₀₁, d'au moins un mode d'ordre supérieur, le profil d'indice du coeur étant déterminé de manière à ce que, pour ledit mode supérieur, pour ladite plage spectrale de fonctionnement, premièrement la dispersion chromatique soit inférieure à -150 ps/nm.km, deuxièmement la pente de dispersion chromatique soit strictement négative, troisièmement la surface effective soit supérieure à 40µm², quatrièmement, la différence entre d'une part la longueur d'onde correspondant au minimum global de dispersion chromatique et étant située hors de ladite plage spectrale de fonctionnement et d'autre part la longueur d'onde correspondant à la borne supérieure de ladite plage spectrale de fonctionnement soit supérieure à 35nm, cinquièmement, la variation relative de la pente de dispersion sur ladite plage spectrale de fonctionnement, c'est-à-dire le quotient entre d'une part la différence entre la pente maximale de dispersion chromatique sur ladite plage spectrale de fonctionnement et la pente minimale de dispersion chromatique sur ladite plage spectrale de fonctionnement et d'autre part la pente moyenne de dispersion chromatique sur ladite plage spectrale de fonctionnement, soit, en valeur absolue, inférieure à 30%.

De préférence, afin d'améliorer la qualité de la compensation de dispersion chromatique, même pour des débits élevés, typiquement 10 Gbits/s ou plus, d'une part le profil d'indice du coeur est déterminé de manière à ce que, pour ledit mode supérieur, pour ladite plage spectrale de fonctionnement, la différence entre d'une part la longueur d'onde correspondant au minimum global de dispersion chromatique et étant située hors de ladite plage spectrale de fonctionnement et d'autre part la longueur d'onde correspondant à la borne supérieure de ladite plage spectrale de fonctionnement soit supérieure à 50nm, et d'autre part le profil d'indice du coeur est déterminé de manière à ce que, pour ledit mode supérieur, pour ladite plage spectrale de fonctionnement, la variation relative de la pente de dispersion sur ladite plage spectrale de fonctionnement, soit, en valeur absolue, inférieure à 15%. De plus, le fait que la plage spectrale de fonctionnement soit écartée d'au moins 50nm de la longueur d'onde de dispersion chromatique minimale, impose moins de contraintes sur les profils d'indice de coeur pour que ceux-ci présentent une variation relative de la pente de dispersion sur ladite plage spectrale de fonctionnement, qui soit, en valeur absolue, inférieure à 15%.

De préférence, le profil d'indice du coeur est déterminé de manière à ce que, pour ledit mode supérieur, pour ladite plage spectrale de fonctionnement, la dispersion chromatique soit inférieure à -300 ps/nm.km, ce qui permet de diminuer, pour une fibre optique de ligne donnée, la longueur de fibre optique de compensation à utiliser.

De préférence, le mode d'ordre supérieur est le mode LP₀₂, pour lequel mode des fibres optiques à compensation de dispersion présentant des dispersions chromatiques très négatives peuvent être facilement obtenues et qui est peu sensible aux défauts de géométrie circulaire de la fibre responsables des problèmes de polarisation. Mais d'autres modes d'ordre supérieur sont envisageables comme le mode LP₁₁ ou le mode LP₀₃ par exemple.

L'une des plages spectrales de fonctionnement préférentiel est la bande C allant de 1530nm à 1565nm. Un système de transmission à fibre optique à multiplexage en longueur d'onde, décrit plus en détail ci-après, intégrant une fibre optique à compensation de dispersion de type HOM selon l'invention présentera de préférence une dispersion chromatique cumulée en valeur absolue pour chaque longueur d'onde entre 1530nm et 1565nm inférieure à 30 ps/nm en moyenne sur 100km de transmission. Une autre bande spectrale préférentielle est la bande C étendue qui va de 1530nm à 1580nm. Un système de transmission à fibre optique à multiplexage en longueur d'onde, décrit plus en détail ci-après, intégrant une fibre optique à compensation de dispersion de type HOM selon l'invention présentera de préférence une dispersion chromatique cumulée en valeur absolue pour chaque longueur d'onde entre 1530nm et 1580nm inférieure à 50 ps/nm en moyenne sur 100km de transmission.

De préférence, le profil d'indice du coeur est constitué d'au moins quatre tranches. Le profil d'indice du coeur est avantageusement constitué d'au moins cinq tranches. Plus la dispersion chromatique est négative, plus un nombre élevé de tranches du profil d'indice de coeur est utile pour obtenir une bonne linéarité de la courbe de dispersion chromatique en fonction de la longueur d'onde pour la fibre optique à compensation de dispersion de type HOM selon l'invention. Ce nombre élevé de tranches permet l'obtention d'une fibre optique à compensation de dispersion de type HOM qui tout en permettant une très bonne compensation de la dispersion chromatique ne dégrade pas de manière trop importante les autres propriétés de ladite fibre optique à compensation de dispersion de type HOM. Le nombre de cinq tranches représente un bon compromis entre les propriétés de la fibre optique à compensation de dispersion de type HOM et sa complexité de fabrication, pour une compensation sur une bande spectrale ou sur une bande spectrale étendue. La forme des tranches est par exemple rectangulaire, mais elle peut aussi être triangulaire,en trapèze ou en alpha.

Dans un premier mode de réalisation préférentiel de l'invention, la fibre optique à compensation de dispersion de type HOM selon l'invention comprend un premier type de profil d'indice variable du coeur à quatre tranches. Le premier type de profil d'indice variable du coeur est successivement constitué, du centre vers la périphérie, d'une tranche centrale d'indice maximal supérieur à l'indice de la gaine, d'une première tranche périphérique d'indice maximal inférieur à l'indice de la tranche centrale, d'une deuxième tranche périphérique d'indice maximal inférieur à l'indice de la tranche centrale, d'une troisième tranche périphérique d'indice maximal inférieur à l'indice de la tranche centrale.

Afin d'améliorer la qualité de la compensation de la fibre optique à compensation de dispersion de type HOM selon l'invention ainsi que ses autres propriétés, un certain nombre des plages préférentielles pour les indices et les rayons du premier type de profil d'indice du coeur vont maintenant être données.

De préférence, la différence d'indice maximale Δn₁ entre l'indice de la tranche centrale et l'indice de la gaine est comprise entre 20.10⁻³ et 35.10⁻³ et le rayon extérieur r₁ de la tranche centrale est compris entre 3µm et 5µm.

De préférence, la valeur absolue de la différence d'indice |Δn₂| entre l'indice de la première tranche périphérique et l'indice de la gaine reste inférieure à 5.10⁻³ et le rayon extérieur r₂ de la première tranche périphérique est compris entre 6µm et 11µm. L'expression « reste inférieure » signifie « est inférieure » si le paramètre est constant et signifie « reste inférieure » sur la tranche considérée si le paramètre est variable sur la tranche considérée.

De préférence, la valeur absolue de la différence d'indice |Δn₃| entre l'indice de la deuxième tranche périphérique et l'indice de la gaine reste inférieure à 5.10⁻³ et le rayon extérieur r₃ de la deuxième tranche périphérique est compris entre 8µm et 15µm.

De préférence, la différence d'indice Δn₄ entre l'indice de la troisième tranche périphérique et l'indice de la gaine reste comprise entre 0 et 8.10⁻³ et le rayon extérieur r₄ de la troisième tranche périphérique est compris entre 10µm et 17µm.

Dans un deuxième mode de réalisation préférentiel de l'invention, la fibre optique à compensation de dispersion de type HOM selon l'invention comprend un deuxième type de profil d'indice variable du coeur à cinq tranches. Le deuxième type de profil d'indice variable du coeur est successivement constitué, du centre vers la périphérie, d'une tranche centrale d'indice maximal supérieur à l'indice de la gaine, d'une première tranche enterrée d'indice minimal inférieur à l'indice de la gaine, d'une première tranche annulaire d'indice maximal supérieur à l'indice de la gaine et inférieur à l'indice maximal de la tranche centrale, d'une deuxième tranche enterrée d'indice minimal inférieur à l'indice de la gaine, d'une deuxième tranche annulaire d'indice maximal supérieur à l'indice de la gaine et inférieur à l'indice maximal de la tranche centrale.

Afin d'améliorer la qualité de la compensation de la fibre optique à compensation de dispersion de type HOM selon l'invention ainsi que ses autres propriétés, un certain nombre des plages préférentielles pour les indices et les rayons du deuxième type de profil d'indice du coeur vont maintenant être données.

De préférence, la différence d'indice maximale Δn₁ entre l'indice de la tranche centrale et l'indice de la gaine est comprise entre 23.10⁻³ et 35.10⁻³ et le rayon r₁ extérieur de la tranche centrale est compris entre 3µm et 4,5µm.

De préférence, la différence d'indice Δn₂ entre l'indice de la première tranche enterrée et l'indice de la gaine reste comprise entre -8.10⁻³ et 0 et le rayon extérieur r₂ de la première tranche enterrée est compris entre 4,5µm et 7,5µm. L'expression « reste comprise » signifie « est comprise » si le paramètre est constant et signifie « reste comprise » sur la tranche considérée si le paramètre est variable sur la tranche considérée.

De préférence, la différence d'indice Δn₃ entre l'indice de la première tranche annulaire et l'indice de la gaine reste comprise entre 2.10⁻³ et 8.10⁻³ et le rayon extérieur r₃ de la première tranche annulaire est compris entre 6µm et 11µm.

De préférence, la différence d'indice Δn₄ entre l'indice de la deuxième tranche enterrée et l'indice de la gaine est comprise entre -8. 10⁻³ et 0 et le rayon extérieur r₄ de la deuxième tranche enterrée est compris entre 10µm et 15µm.

De préférence, la différence d'indice Δn₅ entre l'indice de la deuxième tranche annulaire et l'indice de la gaine reste comprise entre 0 et 10.10⁻³ et le rayon extérieur r₅ de la deuxième tranche annulaire est compris entre 13µm et 17µm.

Afin que la fibre optique de compensation de dispersion chromatique de type HOM selon l'invention soit particulièrement intéressante au niveau du bilan des pertes, ladite fibre optique à compensation de dispersion présente de préférence une atténuation inférieure à 1,5dB/km à une longueur d'onde de 1550nm.

L'objet de l'invention concerne également un module de compensation de dispersion chromatique intégrant une fibre optique de compensation de dispersion chromatique de type HOM selon l'invention. De préférence, ce module comporte successivement en série un premier convertisseur de mode capable de convertir le mode fondamental en le mode d'ordre supérieur, une fibre optique à compensation de dispersion selon l'invention et un deuxième convertisseur de mode capable de convertir le mode d'ordre supérieur en le mode fondamental. Ce module peut être intégré dans un système de transmission à fibre optique à multiplexage en longueur d'onde, lequel système comporte alors successivement en série une fibre optique de ligne et un module de compensation selon l'invention. Dans ce système de transmission à fibre optique à multiplexage en longueur d'onde selon l'invention, le rapport entre la longueur de la fibre optique de ligne et la longueur de la fibre optique à compensation de dispersion est de préférence sensiblement l'inverse de la valeur absolue du rapport entre la dispersion chromatique de la fibre optique de ligne à une longueur d'onde de 1550nm et la dispersion chromatique de la fibre optique à compensation de dispersion à une longueur d'onde de 1550nm, ceci afin de permettre une compensation optimisée.

L'invention sera mieux comprise et d'autres particularités et avantages apparaîtront à l'aide de la description ci-après et des dessins joints, donnés à titre d'exemples, où :
- la figure 1 représente un tableau comprenant les valeurs de rayons et de différences d'indice maximales en valeur absolue pour une quinzaine d'exemples de profils des premier, deuxième et autres types de fibre optique à compensation de dispersion de type HOM selon l'invention ;
- la figure 2 représente un tableau comprenant d'autres propriétés des profils de fibre optique à compensation de dispersion de type HOM selon l'invention représentés à la figure 1 pour le mode LP₀₂ ;
- la figure 3 représente schématiquement un exemple de premier type de profil à quatre tranches d'une fibre optique à compensation de dispersion de type HOM selon l'invention ;
- la figure 4 représente schématiquement, sur une large plage spectrale, les variations de dispersion chromatique de l'exemple de profil représenté à la figure 3 ;
- la figure 5 représente schématiquement un deuxième type de profil à cinq tranches d'une fibre optique à compensation de dispersion de type HOM selon l'invention ;
- la figure 6 représente schématiquement, sur une large plage spectrale, les variations de dispersion chromatique de l'exemple de profil représenté à la figure 5 ;
- la figure 7 représente schématiquement un système de transmission à fibre optique à multiplexage en longueur d'onde selon l'invention.

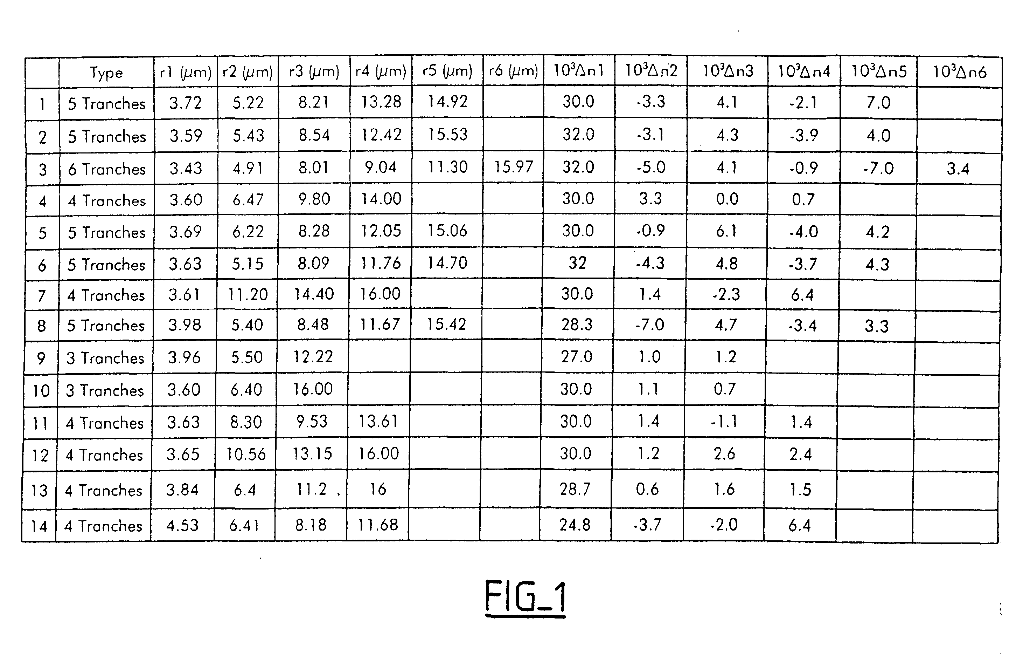

La figure 1 représente un tableau comprenant les valeurs de rayons et de différences d'indice maximales en valeur absolue pour une quinzaine d'exemples de profils des premier, deuxième et autres types de fibre optique à compensation de dispersion de type HOM selon l'invention. La colonne de gauche comprend la dénomination des profils du n°1 au n°14. La deuxième colonne indique le nombre de tranches que comporte le profil d'indice de coeur de l'exemple considéré. Les six colonnes suivantes expriment en µm des rayons du profil d'indice variable de coeur. Les six dernières colonnes expriment mille fois des différences d'indice par rapport à la gaine d'indice constant (sans unité). Toutes les cases du tableau ne sont pas remplies, tous les profils n'ayant pas le même nombre de tranches.

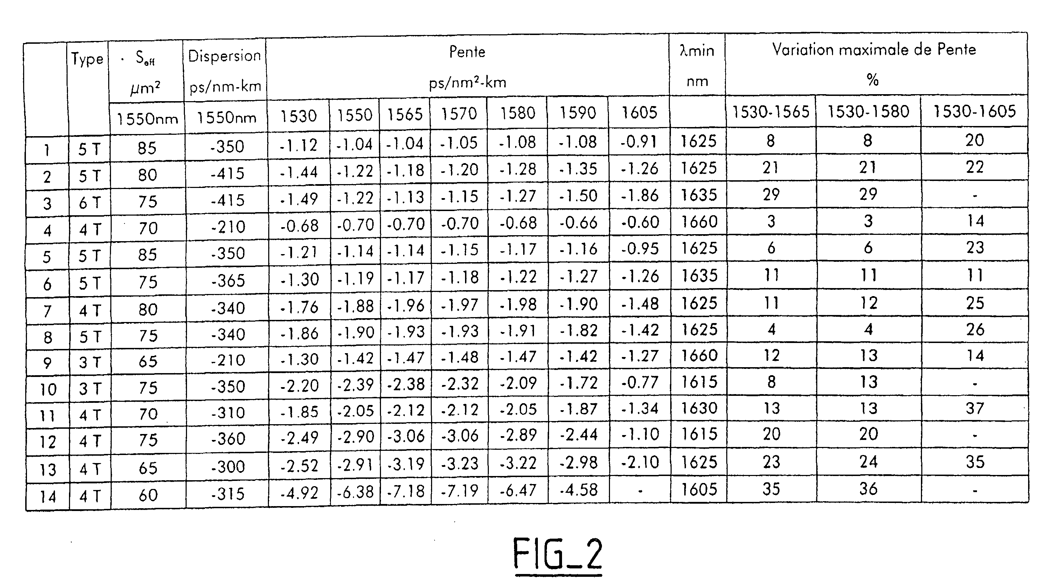

La figure 2 représente un tableau comprenant d'autres propriétés des profils de fibre optique à compensation de dispersion de type HOM selon l'invention. Les cases du tableau ne comprenant pas de chiffres mais seulement un tiret correspondent à des propriétés tellement mauvaises que celles-ci rendent la fibre optique impropre à l'utilisation à la longueur d'onde considérée ou dans la plage spectrale de fonctionnement considérée. La colonne de gauche comprend la dénomination des profils déjà expliquée ci-dessus. La colonne suivante contient le nombre de tranches que comporte chaque profil considéré. Pour chaque profil considéré, les autres colonnes représentent des propriétés de la portion de fibre optique correspondant au profil considéré. La colonne suivante représente la surface effective S_{eff} exprimée en µm² à une longueur d'onde de 1550nm. La colonne suivante représente la dispersion chromatique exprimée en ps/nm.km à la longueur d'onde de 1550nm. Les sept colonnes suivantes représentent les pentes de dispersion chromatique exprimées en ps/nm².km respectivement aux longueurs d'onde de 1530nm, 1550nm, 1565nm, 1570nm, 1580nm, 1590nm, 1605nm. La colonne suivante représente la longueur d'onde de dispersion chromatique minimale exprimée en nm. Les trois dernières colonnes représentent les variations relatives maximale de pente exprimées en %, respectivement sur des plages spectrales de fonctionnement allant de 1530nm à 1565nm, allant de 1530nm à 1580nm, allant de 1530nm à 1605nm. La variation relative de la pente de dispersion sur une plage spectrale de fonctionnement correspond au quotient entre d'une part la différence entre la pente maximale de dispersion chromatique sur ladite plage spectrale de fonctionnement et la pente minimale de dispersion chromatique sur ladite plage spectrale de fonctionnement et d'autre part la pente moyenne de dispersion chromatique sur ladite plage spectrale de fonctionnement. Les mauvais résultats de la dernière colonne correspondant à des variations relatives maximales de pente nettement supérieures aux autres colonnes, peuvent notamment s'expliquer par des longueurs d'onde de dispersion chromatique minimale trop proches de la borne supérieure de la plage spectrale de fonctionnement considérée.

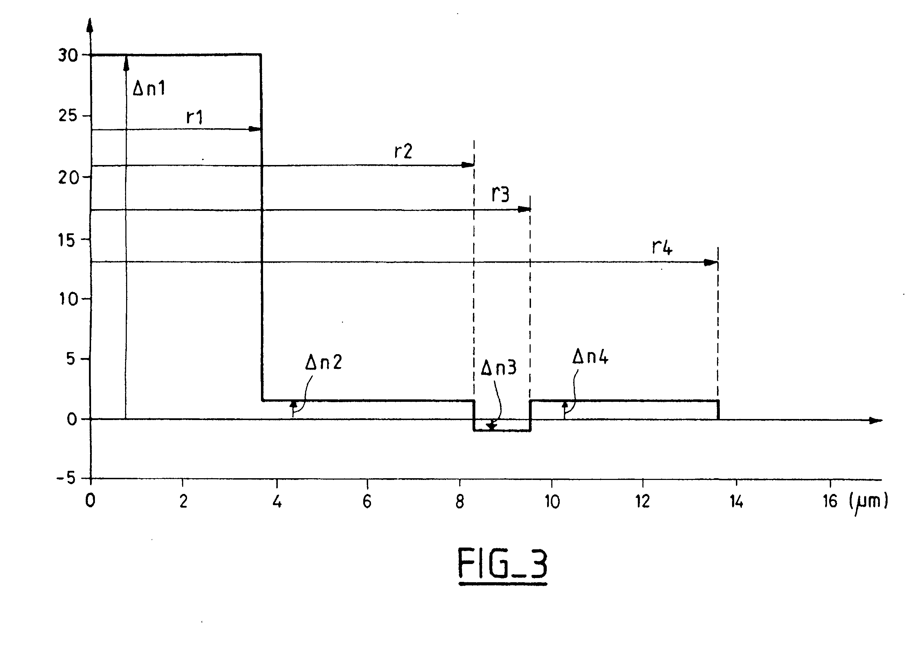

La figure 3 représente schématiquement un exemple de premier type de profil à quatre tranches d'une fibre optique à compensation de dispersion de type HOM selon l'invention. En abscisse sont portés les rayons exprimés en µm. En ordonnées sont portées mille fois les différences d'indice exprimées sans unité. La première tranche appelée tranche centrale présente une différence maximale d'indice Δn1 avec l'indice constant de la gaine et un rayon extérieur r1. La différence d'indice maximale Δn1 est positive. De préférence, entre un rayon nul et le rayon r1, l'indice est constant. La deuxième tranche appelée première tranche périphérique présente une différence d'indice maximale en valeur absolue Δn2 avec l'indice constant de la gaine et un rayon extérieur r2. La différence d'indice maximale en valeur absolue Δn2 peut être positive ou négative. De préférence, entre le rayon r1 et le rayon r2, l'indice est constant. La troisième tranche appelée deuxième tranche périphérique présente une différence d'indice maximale en valeur absolue Δn3 avec l'indice constant de la gaine et un rayon extérieur r3. La différence d'indice maximale en valeur absolue Δn3 peut être positive ou négative. De préférence, entre le rayon r2 et le rayon r3, l'indice est constant. La quatrième tranche appelée troisième tranche périphérique présente une différence d'indice maximale en valeur absolue Δn4 avec l'indice constant de la gaine et un rayon extérieur r4. La différence d'indice maximale en valeur absolue Δn4 est positive. De préférence, entre le rayon r3 et le rayon r4, l'indice est constant. Au-delà du rayon r4 se trouve la gaine d'indice constant.

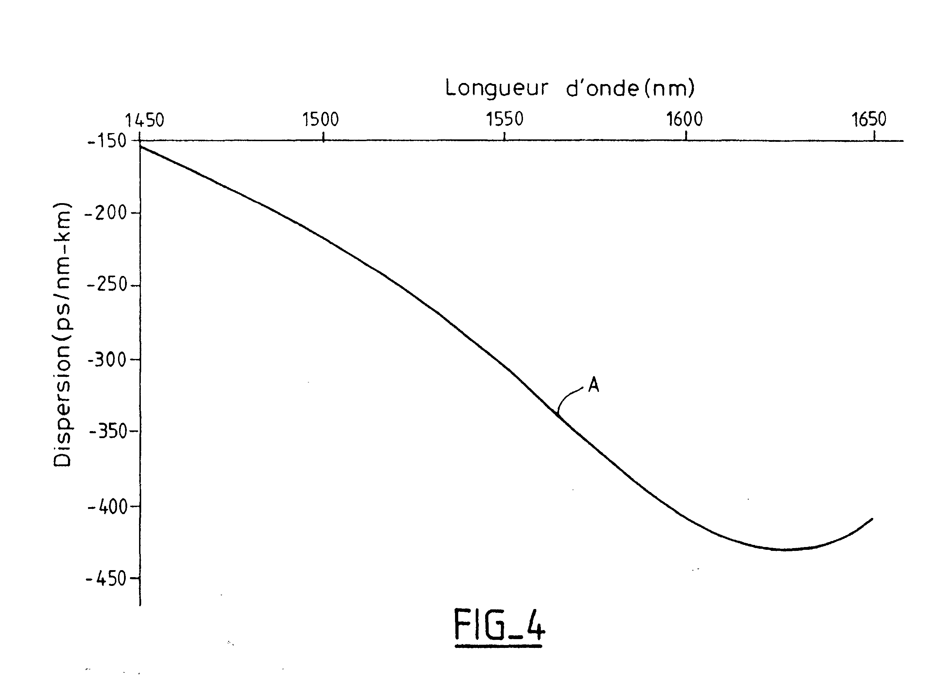

La figure 4 représente schématiquement, sur une large plage spectrale, les variations de dispersion chromatique de l'exemple de profil représenté à la figure 3. La courbe A représente la dispersion chromatique exprimée en ps/nm.km sur une plage spectrale de longueurs d'onde allant de 1450nm à 1650nm, pour la fibre optique à compensation de dispersion de type HOM selon l'invention. L'exemple considéré sur la figure 4 est l'exemple n°11 sur les figures 1 et 2. La courbe A, correspondant à un profil à quatre tranches, présente une très bonne linéarité correspondant à une variation relative maximale de pente valant 13% (voir figure 2) sur une plage spectrale de fonctionnement allant de 1530 à 1580nm, la différence entre la longueur d'onde de dispersion chromatique minimale et la borne supérieure de la plage spectrale de fonctionnement valant 50nm.

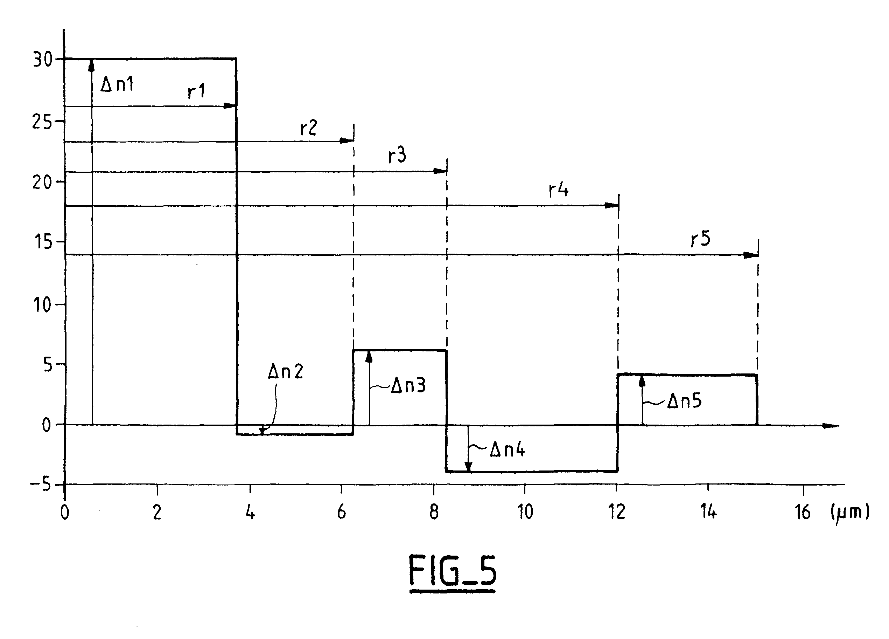

La figure 5 représente schématiquement un deuxième type de profil à cinq tranches d'une fibre optique à compensation de dispersion de type HOM selon l'invention. En abscisse sont portés les rayons exprimés en µm. En ordonnées sont portées mille fois les différences d'indice exprimées sans unité. La première tranche appelée tranche centrale présente une différence d'indice maximale en valeur absolue Δn1 avec l'indice constant de la gaine et un rayon extérieur r1. La différence d'indice maximale Δn1 est positive. De préférence, entre un rayon nul et le rayon r1, l'indice est constant. La deuxième tranche appelée première tranche enterrée présente une différence d'indice maximale en valeur absolue Δn2 avec l'indice constant de la gaine et un rayon extérieur r2. La différence d'indice maximale en valeur absolue Δn2 est négative. De préférence, entre le rayon r1 et le rayon r2, l'indice est constant. La troisième tranche appelée première tranche annulaire présente une différence d'indice maximale en valeur absolue Δn3 avec l'indice constant de la gaine et un rayon extérieur r3. La différence d'indice maximale en valeur absolue Δn3 est positive. De préférence, entre le rayon r2 et le rayon r3, l'indice est constant. La quatrième tranche appelée deuxième tranche enterrée présente une différence d'indice maximale en valeur absolue Δn4 avec l'indice constant de la gaine et un rayon extérieur r4. La différence d'indice maximale en valeur absolue Δn4 est négative. De préférence, entre le rayon r3 et le rayon r4, l'indice est constant. La cinquième tranche appelée deuxième tranche annulaire présente une différence d'indice maximale en valeur absolue Δn5 avec l'indice constant de la gaine et un rayon extérieur r5. La différence d'indice maximale en valeur absolue Δn5 est positive. De préférence, entre le rayon r4 et le rayon r5, l'indice est constant. Au-delà du rayon r5 se trouve la gaine d'indice constant.

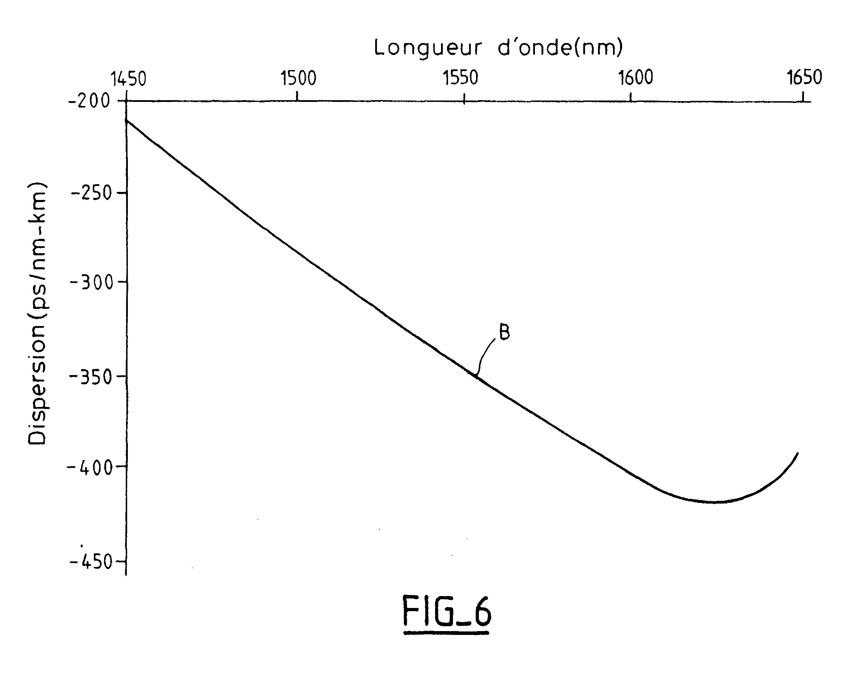

La figure 6 représente schématiquement, sur une large plage spectrale, les variations de dispersion chromatique de l'exemple de profil représenté à la figure 5. La courbe B représente la dispersion chromatique exprimée en ps/nm.km sur une plage spectrale de longueurs d'onde allant de 1450nm à 1650nm, pour la fibre optique à compensation de dispersion de type HOM selon l'invention. L'exemple considéré sur la figure 5 est l'exemple n°5 sur les figures 1 et 2. La courbe B, correspondant à un profil à cinq tranches, présente une excellente linéarité correspondant à une variation relative maximale de pente valant 6% (voir figure 2) sur une plage spectrale de fonctionnement allant de 1530 à 1580nm, la différence entre la longueur d'onde de dispersion chromatique minimale et la borne supérieure de la plage spectrale de fonctionnement valant 45nm.

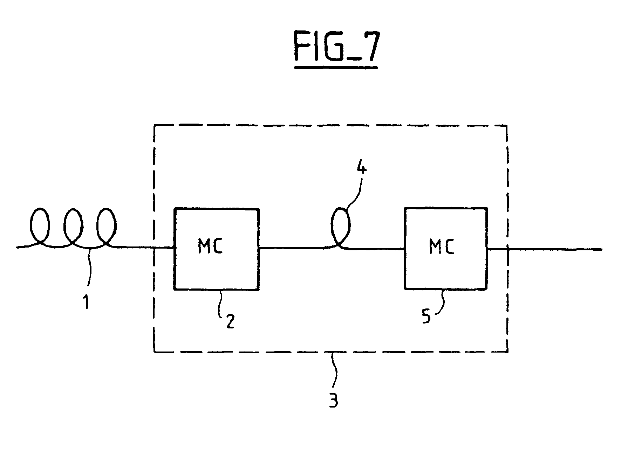

La figure 7 représente schématiquement un système de transmission à fibre optique à multiplexage en longueur d'onde selon l'invention. Le système de transmission comporte successivement en série les éléments suivants, de l'amont vers l'aval du point de vue de la propagation du signal lumineux : une fibre optique de ligne 1 suivie d'un module 3 de compensation lequel comporte d'abord un convertisseur de mode 2 transformant l'essentiel de l'énergie lumineuse se propageant selon le mode fondamental LP₀₁ en un mode d'ordre supérieur, par exemple LP₀₂, puis une fibre optique 4 à compensation de dispersion de type HOM selon l'invention, compensant la dispersion chromatique de la fibre optique 1 de ligne mais dans le mode d'ordre supérieur LP₀₂, ensuite un convertisseur de mode 5 transformant l'essentiel de l'énergie lumineuse se propageant selon le mode d'ordre supérieur LP₀₂ en le mode fondamental LP₀₁. Le système de transmission selon l'invention peut aussi comporter d'autres éléments non représentés sur la figure 7 pour des raisons de clarté comme des transmetteurs, des récepteurs, des amplificateurs, et/ou contenir plusieurs fois la séquence d'éléments représentés à la figure 7.

## Revendications

1. Fibre optique à compensation de dispersion,
pour système de transmission à multiplexage en longueur d'onde,
comportant successivement du centre vers la périphérie un coeur présentant un profil d'indice variable puis une gaine d'indice constant,
permettant la propagation, pour une plage spectrale de fonctionnement donnée supérieure à 30nm, en plus du mode fondamental LP₀₁, d'au moins un mode d'ordre supérieur,
le profil d'indice du coeur étant déterminé de manière à ce que, pour ledit mode supérieur, pour ladite plage spectrale de fonctionnement,
premièrement la dispersion chromatique soit inférieure à -150 ps/nm.km,
deuxièmement la pente de dispersion chromatique soit strictement négative,
troisièmement la surface effective soit supérieure à 40µm²,
**caractérisée en ce que**
quatrièmement, la différence entre d'une part la longueur d'onde correspondant au minimum global de dispersion chromatique et étant située hors de ladite plage spectrale de fonctionnement et d'autre part la longueur d'onde correspondant à la borne supérieure de ladite plage spectrale de fonctionnement soit supérieure à 35nm
et cinquièmement, la variation relative de la pente de dispersion sur ladite plage spectrale de fonctionnement, c'est-à-dire le quotient entre d'une part la différence entre la pente maximale de dispersion chromatique sur ladite plage spectrale de fonctionnement et la pente minimale de dispersion chromatique sur ladite plage spectrale de fonctionnement et d'autre part la pente moyenne de dispersion chromatique sur ladite plage spectrale de fonctionnement, soit, en valeur absolue, inférieure à 30%.

2. Fibre optique à compensation de dispersion selon la revendication 1, **caractérisée en ce que** le profil d'indice du coeur est déterminé de manière à ce que, pour ledit mode supérieur, pour ladite plage spectrale de fonctionnement, la variation relative de la pente de dispersion sur ladite plage spectrale de fonctionnement, soit, en valeur absolue, inférieure à 15%.

3. Fibre optique à compensation de dispersion selon l'une quelconque des revendications précédentes, **caractérisée en ce que** le profil d'indice du coeur est déterminé de manière à ce que, pour ledit mode supérieur, pour ladite plage spectrale de fonctionnement, la différence entre d'une part la longueur d'onde correspondant au minimum global de dispersion chromatique et étant située hors de ladite plage spectrale de fonctionnement et d'autre part la longueur d'onde correspondant à la borne supérieure de ladite plage spectrale de fonctionnement soit supérieure à 50nm.

4. Fibre optique à compensation de dispersion selon l'une quelconque des revendications précédentes, **caractérisée en ce que** le profil d'indice du coeur est déterminé de manière à ce que, pour ledit mode supérieur, pour ladite plage spectrale de fonctionnement, la dispersion chromatique soit inférieure à -300 ps/nm.km.

5. Fibre optique à compensation de dispersion selon l'une quelconque des revendications précédentes, **caractérisée en ce que** le mode d'ordre supérieur est le mode LP₀₂.

6. Fibre optique à compensation de dispersion selon l'une quelconque des revendications précédentes, **caractérisée en ce que** la plage spectrale de fonctionnement est la bande C allant de 1530nm à 1565nm.

7. Fibre optique à compensation de dispersion selon l'une quelconque des revendications 1 à 5, **caractérisée en ce que** la plage spectrale de fonctionnement est la bande C étendue allant de 1530nm à 1580nm.

8. Fibre optique à compensation de dispersion selon l'une quelconque des revendications précédentes, **caractérisée en ce que** le profil d'indice du coeur est constitué d'au moins quatre tranches.

9. Fibre optique à compensation de dispersion selon la revendication 8, **caractérisée en ce que** le profil d'indice variable du coeur est successivement constitué, du centre vers la périphérie,
d'une tranche centrale d'indice maximal supérieur à l'indice de la gaine,
d'une première tranche périphérique d'indice maximal inférieur à l'indice de la tranche centrale,
d'une deuxième tranche périphérique d'indice maximal inférieur à l'indice de la tranche centrale,
d'une troisième tranche périphérique d'indice maximal inférieur à l'indice de la tranche centrale.

10. Fibre optique à compensation de dispersion selon la revendication 9, **caractérisée en ce que** la différence d'indice maximale en valeur absolue (Δn₁) entre l'indice de la tranche centrale et l'indice de la gaine est comprise entre 20.10⁻³ et 35.10⁻³ et **en ce que** le rayon extérieur (r₁) de la tranche centrale est compris entre 3µm et 5µm.

11. Fibre optique à compensation de dispersion selon l'une quelconque des revendications 9 à 10, **caractérisée en ce que** la valeur absolue de la différence d'indice (|Δn₂|) entre l'indice de la première tranche périphérique et l'indice de la gaine reste inférieure à 5.10⁻³ et **en ce que** le rayon extérieur (r₂) de la première tranche périphérique est compris entre 6µm et 11µm.

12. Fibre optique à compensation de dispersion selon l'une quelconque des revendications 9 à 11, **caractérisée en ce que** la valeur absolue de la différence d'indice (|Δn₃|) entre l'indice de la deuxième tranche périphérique et l'indice de la gaine reste inférieure à 5.10⁻³ et **en ce que** le rayon extérieur (r₃) de la deuxième tranche périphérique est compris entre 8µm et 15µm.

13. Fibre optique à compensation de dispersion selon l'une quelconque des revendications 9 à 12, **caractérisée en ce que** la différence d'indice (Δn₄) entre l'indice de la troisième tranche périphérique et l'indice de la gaine reste comprise entre 0 et 8.10⁻³ et **en ce que** le rayon extérieur (r₄) de la troisième tranche périphérique est compris entre 10µm et 17µm.

14. Fibre optique à compensation de dispersion selon l'une quelconque des revendications 1 à 7, **caractérisée en ce que** le profil d'indice du coeur est constitué d'au moins cinq tranches.

15. Fibre optique à gestion de dispersion selon la revendication 14, **caractérisée en ce que** le profil d'indice variable du coeur est successivement constitué, du centre vers la périphérie,
d'une tranche centrale d'indice maximal supérieur à l'indice de la gaine,
d'une première tranche enterrée d'indice minimal inférieur à l'indice de la gaine,
d'une première tranche annulaire d'indice maximal supérieur à l'indice de la gaine et inférieur à l'indice maximal de la tranche centrale,
d'une deuxième tranche enterrée d'indice minimal inférieur à l'indice de la gaine,
d'une deuxième tranche annulaire d'indice maximal supérieur à l'indice de la gaine et inférieur à l'indice maximal de la tranche centrale.

16. Fibre optique à compensation de dispersion selon la revendication 15, **caractérisée en ce que** la différence d'indice maximale en valeur absolue (Δn₁) entre l'indice de la tranche centrale et l'indice de la gaine est comprise entre 23.10⁻³ et 35.10⁻³ et **en ce que** le rayon (r₁) extérieur de la tranche centrale est compris entre 3µm et 4,5µm.

17. Fibre optique à compensation de dispersion selon l'une quelconque des revendications 15 à 16, **caractérisée en ce que** la différence d'indice (Δn₂) entre l'indice de la première tranche enterrée et l'indice de la gaine reste comprise entre -8.10⁻³ et 0 et **en ce que** le rayon extérieur (r₂) de la première tranche enterrée est compris entre 4,5µm et 7,5µm.

18. Fibre optique à compensation de dispersion selon l'une quelconque des revendications 15 à 17, **caractérisée en ce que** la différence d'indice (Δn₃) entre l'indice de la première tranche annulaire et l'indice de la gaine reste comprise entre 2.10⁻³ et 8.10⁻³ et **en ce que** le rayon extérieur (r₃) de la première tranche annulaire est compris entre 6µm et 11µm.

19. Fibre optique à compensation de dispersion selon l'une quelconque des revendications 15 à 18, **caractérisée en ce que** la différence d'indice (Δn₄) entre l'indice de la deuxième tranche enterrée et l'indice de la gaine est comprise entre -8. 10⁻³ et 0 et **en ce que** le rayon extérieur (r₄) de la deuxième tranche enterrée est compris entre 10µm et 15µm.

20. Fibre optique à compensation de dispersion selon l'une quelconque des revendications 15 à 19, **caractérisée en ce que** la différence d'indice (Δn₅) entre l'indice de la deuxième tranche annulaire et l'indice de la gaine reste comprise entre 0 et 10.10⁻³ et **en ce que** le rayon extérieur (r₅) de la deuxième tranche annulaire est compris entre 13µm et 17µm.

21. Fibre optique à compensation de dispersion selon l'une quelconque des revendications précédentes, **caractérisée en ce que** ladite fibre optique à compensation de dispersion présente une atténuation inférieure à 1,5dB/km à une longueur d'onde de 1550nm.

22. Module de compensation de dispersion chromatique, **caractérisé en ce que** ledit module (3) comporte une fibre optique (4) à compensation de dispersion selon l'une quelconque des revendications précédentes.

23. Module de compensation de dispersion chromatique selon la revendication 22, **caractérisé en ce que** ledit module (3) comporte successivement en série un premier convertisseur (2) de mode capable de convertir le mode fondamental en le mode d'ordre supérieur, ladite fibre optique (4) à compensation de dispersion et un deuxième convertisseur (5) de mode capable de convertir le mode d'ordre supérieur en le mode fondamental.

24. Système de transmission à fibre optique à multiplexage en longueur d'onde, **caractérisé en ce que** ledit système comporte successivement en série une fibre optique (1) de ligne et un module (3) de compensation selon l'une quelconque des revendications 22 à 23.

25. Système de transmission à fibre optique à multiplexage en longueur d'onde selon la revendication 24, **caractérisé en ce que** le rapport entre la longueur de la fibre optique (1) de ligne et la longueur de la fibre optique (4) à compensation de dispersion est sensiblement l'inverse de la valeur absolue du rapport entre la dispersion chromatique de la fibre optique (1) de ligne à une longueur d'onde de 1550nm et la dispersion chromatique de la fibre optique(4) à compensation de dispersion à une longueur d'onde de 1550nm.

26. Système de transmission à fibre optique à multiplexage en longueur d'onde selon l'une quelconque des revendications 24 à 25, **caractérisé en ce que** la dispersion chromatique cumulée en valeur absolue pour chaque longueur d'onde entre 1530nm et 1565nm est inférieure à 30 ps/nm en moyenne sur 100km de transmission.

27. Système de transmission à fibre optique à multiplexage en longueur d'onde selon l'une quelconque des revendications 24 à 25, **caractérisé en ce que** la dispersion chromatique cumulée en valeur absolue pour chaque longueur d'onde entre 1530nm et 1580nm est inférieure à 50 ps/nm en moyenne sur 100km de transmission.

## Patentansprüche

1. Optische Faser zur Dispersionskompensation für ein Wellenlängenmultiplex-Übertragungssystem,
welche vom Mittelpunkt zum Rand hintereinander einen Kern, welcher ein veränderliches Indexprofil aufweist, gefolgt von einem Mantel mit konstantem Index umfasst,
welche für einen gegebenen Spektralbereich des Funktionierens größer als 30 nm die Ausbreitung mindestens einer höheren Mode zusätzlich zur Fundamentalmode LP₀₁ ermöglicht,
wobei das Indexprofil des Kerns in einer Weise bestimmt ist, dass für die höhere Mode und für den Spektralbereich des Funktionierens
erstens die chromatische Dispersion kleiner als -150 ps/nm x km ist,
zweitens die Steigung der chromatischen Dispersion streng negativ ist,
drittens die effektive Oberfläche größer als 40 µm² ist,
**dadurch gekennzeichnet, dass**
viertens der Unterschied zwischen einerseits der Wellenlänge, welche dem globalen Minimum der chromatischen Dispersion entspricht und außerhalb des Spektralbereichs des Funktionierens liegt, und andererseits der Wellenlänge, welche der oberen Grenze des Spektralbereichs des Funktionierens entspricht, größer als 35 nm ist, und
fünftens die relative Variation der Steigung der Dispersion über den Spektralbereich des Funktionierens, d.h. der Quotient zwischen einerseits der Differenz zwischen der maximalen Steigung der chromatischen Dispersion in dem Spektralbereich des Funktionierens und der minimalen Steigung der chromatischen Dispersion in dem Spektralbereich des Funktionierens und andererseits der mittleren Steigung der chromatischen Dispersion in dem Spektralbereich des Funktionierens, als absoluter Wert kleiner als 30% ist.

2. Optische Faser zur Dispersionskompensation nach Anspruch 1,
**dadurch gekennzeichnet, dass** das Indexprofil des Kerns in einer Weise bestimmt ist, dass für die höhere Mode und für den Spektralbereich des Funktionierens die relative Variation der Steigung der Dispersion über den Spektralbereich des Funktionierens als Absolutwert kleiner als 15% ist.

3. Optische Faser zur Dispersionskompensation nach einem der vorhergehenden Ansprüche,
**dadurch gekennzeichnet, dass** das Indexprofil des Kerns in einer Weise bestimmt ist, dass für die höhere Mode und für den Spektralbereich des Funktionierens die Differenz zwischen einerseits der Wellenlänge, welche dem globalen Minimum der chromatischen Dispersion entspricht und außerhalb dem Spektralbereich des Funktionierens liegt, und andererseits der Wellenlänge, welche der oberen Grenze des Spektralbereichs des Funktionierens entspricht, größer als 50 nm ist.

4. Optische Faser zur Dispersionskompensation nach einem der vorhergehenden Ansprüche,
**dadurch gekennzeichnet, dass** das Indexprofil des Kerns in einer Weise bestimmt ist, dass für die höhere Mode und für den Spektralbereich des Funktionierens die chromatische Dispersion kleiner als -300 ps/nm x km ist.

5. Optische Faser zur Dispersionskompensation nach einem der vorhergehenden Ansprüche,
**dadurch gekennzeichnet, dass** die höhere Mode die Mode LP₀₂ ist.

6. Optische Faser zur Dispersionskompensation nach einem der vorhergehenden Ansprüche,
**dadurch gekennzeichnet, dass** der Spektralbereich des Funktionierens die Bande C, welche von 1530 nm bis 1565 nm reicht, ist.

7. Optische Faser zur Dispersionskompensation nach einem der Ansprüche 1-5,
**dadurch gekennzeichnet, dass** der Spektralbereich des Funktionierens die vergrößerte Bande C, welche von 1530 nm bis 1580 nm reicht, ist.

8. Optische Faser zur Dispersionskompensation nach einem der vorhergehenden Ansprüche,
**dadurch gekennzeichnet, dass** das Indexprofil des Kerns aus mindestens vier Abschnitten besteht.

9. Optische Faser zur Dispersionskompensation nach Anspruch 8,
**dadurch gekennzeichnet, dass** das veränderliche Indexprofil des Kerns hintereinander von der Mitte zum Rand besteht aus
einem zentralen Abschnitt mit einem maximalen Index größer als der Index des Mantels,
einem ersten Randabschnitt mit einem maximalen Index kleiner als der Index des zentralen Abschnitts,
einem zweiten Randabschnitt mit einem maximalen Index kleiner als der Index des zentralen Abschnitts,
einem dritten Randabschnitt mit einem maximalen Index kleiner als der Index des zentralen Abschnitts.

10. Optische Faser zur Dispersionskompensation nach Anspruch 9,
**dadurch gekennzeichnet, dass** die Differenz zwischen dem maximalen Index (Δn₁) zwischen dem Index des zentralen Abschnitts und dem Index des Mantels als Absolutwert zwischen 20x10⁻³ und 35x10⁻³ liegt und dass der Außenradius (r₁) des zentralen Abschnitts zwischen 3 µm und 5 µm liegt.

11. Optische Faser zur Dispersionskompensation nach einem der Ansprüche 9-10,
**dadurch gekennzeichnet, dass** der Absolutwert der Indexdifferenz (|Δn₂|) zwischen dem Index des ersten Randabschnitts und dem Index des Mantels kleiner als 5x10⁻³ bleibt und dass der Außenradius (r₂) des ersten Randabschnitts zwischen 6 µm und 11 µm liegt.

12. Optische Faser zur Dispersionskompensation nach einem der Ansprüche 9-11,
**dadurch gekennzeichnet, dass** der Absolutwert der Indexdifferenz (|Δn₃|) zwischen dem Index des zweiten Randabschnitts und dem Index des Mantels kleiner als 5x10⁻³ bleibt und dass der Außenradius (r₃) des zweiten Randabschnitts zwischen 8 µm und 15 µm liegt.

13. Optische Faser zur Dispersionskompensation nach einem der Ansprüche 9-12,
**dadurch gekennzeichnet, dass** die Indexdifferenz (Δn₄) zwischen dem Index des dritten Randabschnitts und dem Index des Mantels zwischen 0 und 8x10⁻³ bleibt und dass der Außenradius (r₄) des dritten Randabschnitts zwischen 10 µm und 17 µm liegt.

14. Optische Faser zur Dispersionskompensation nach einem der Ansprüche 1-7,
**dadurch gekennzeichnet, dass** das Indexprofil des Kerns aus mindestens fünf Abschnitten besteht.

15. Optische Faser zur Dispersionskompensation nach Anspruch 14,
**dadurch gekennzeichnet, dass** das variable Indexprofil des Kerns von der Mitte zum Rand hin sukzessive besteht aus
einem zentralen Abschnitt mit einem maximalen Index größer als der Index des Mantels,
einem ersten vergrabenen Abschnitt mit einem minimalen Index kleiner als der Index des Mantels,
einem ersten ringförmigen Abschnitt mit einem maximalen Index größer als der Index des Mantels und kleiner als der maximale Index des zentralen Abschnitts,
einem zweiten vergrabenen Abschnitt mit einem minimalen Index kleiner als der Index des Mantels, und
einem zweiten ringförmigen Abschnitt mit einem maximalen Index größer als der Index des Mantels und kleiner als der maximale Index des zentralen Abschnitts.

16. Optische Faser zur Dispersionskompensation nach Anspruch 15,
**dadurch gekennzeichnet, dass** die Differenz des maximalen Index (Δn₁) zwischen dem Index des zentralen Abschnitts und dem Index des Mantels als Absolutwert zwischen 23x10⁻³ und 35x10⁻³ liegt und dass der Außenradius (r₁) des zentralen Abschnitts zwischen 3 µm und 4,5 µm liegt.

17. Optische Faser zur Dispersionskompensation nach einem der Ansprüche 15-16,
**dadurch gekennzeichnet, dass** die Indexdifferenz (Δn₂) zwischen dem Index des ersten vergrabenen Abschnitts und dem Index des Mantels zwischen -8x10⁻³ und 0 bleibt und dass der Außenradius (r₂) des ersten vergrabenen Abschnitts zwischen 4,5 µm und 7,5 µm liegt.

18. Optische Faser zur Dispersionskompensation nach einem der Ansprüche 15-17,
**dadurch gekennzeichnet, dass** der Indexunterschied (Δn₃) zwischen dem Index des ersten ringförmigen Abschnitts und dem Index des Mantels zwischen 2x10⁻³ und 8x10⁻³ bleibt und dass der Außenradius (r₃) des ersten ringförmigen Abschnitts zwischen 6 µm und 11 µm liegt.

19. Optische Faser zur Dispersionskompensation nach einem der Ansprüche 15-18,
**dadurch gekennzeichnet, dass** die Indexdifferenz (Δn₄) zwischen dem Index des zweiten vergrabenen Abschnitts und dem Index des Mantels zwischen -8x10⁻³ und 0 liegt und dass der Außenradius (r₄) des zweiten vergrabenen Abschnitts zwischen 10 µm und 15 µm liegt.

20. Optische Faser zur Dispersionskompensation nach einem der Ansprüche 15-19,
**dadurch gekennzeichnet, dass** die Indexdifferenz (Δn₅) zwischen dem Index des zweiten ringförmigen Abschnitts und dem Index des Mantels zwischen 0 und 10x10⁻³ bleibt und dass der Außenradius (r₅) des zweiten ringförmigen Abschnitts zwischen 13 µm und 17 µm liegt.

21. Optische Faser zur Dispersionskompensation nach einem der vorhergehenden Ansprüche,
**dadurch gekennzeichnet, dass** die optische Faser zur Dispersionskompensation bei einer Wellenlänge von 1550 nm eine Dämpfung kleiner als 1,5 dB/km aufweist.

22. Modul zur Kompensation der chromatischen Dispersion,
**dadurch gekennzeichnet, dass** das Modul (3) eine optische Faser (4) zur Dispersionskompensation nach einem der vorhergehenden Ansprüche umfasst.

23. Modul zur Kompensation der chromatischen Dispersion nach Anspruch 22,
**dadurch gekennzeichnet, dass** das Modul (3) hintereinander in Serie einen ersten Modenwandler (2), welcher in der Lage ist, die Fundamentalmode in die Mode höherer Ordnung zu wandeln, die optische Faser (4) zur Dispersionskompensation und einen zweiten Modenwandler (5), welcher in der Lage ist, die Mode höherer Ordnung in die Fundamentalmode zu wandeln, umfasst.

24. Wellenlängenmultiplex-Übertragungssystem mit optischer Faser,
**dadurch gekennzeichnet, dass** das System sukzessive in Serie eine optische Faser (1) der Leitung und ein Modul (3) zur Kompensation nach einem der Ansprüche 22-23 umfasst.

25. Wellenlängenmultiplex-Übertragungssystem mit optischer Faser nach Anspruch 24,
**dadurch gekennzeichnet, dass** das Verhältnis zwischen der Länge der optischen Faser (1) der Leitung und der Länge der optischen Faser (4) zur Dispersionskompensation im Wesentlichen das Inverse des Absolutwertes des Verhältnisses zwischen der chromatischen Dispersion der optischen Faser (1) der Leitung bei einer Wellenlänge von 1550 nm und der chromatischen Dispersion der optischen Faser (4) zur Dispersionskompensation bei einer Wellenlänge von 1550 nm ist.

26. Wellenlängenmultiplex-Übertragungssystem nach einem der Ansprüche 24-25,
**dadurch gekennzeichnet, dass** die kumulierte chromatische Dispersion als Absolutwert für jede Wellenlänge zwischen 1530 nm und 1565 nm auf 100 km der Übertragung kleiner als durchschnittlich 30 ps/nm ist.

27. Wellenlängenmultiplex-Übertragungssystem nach einem der Ansprüche 24-25,
**dadurch gekennzeichnet, dass** die kumulierte chromatische Dispersion als Absolutwert für jede Wellenlänge zwischen 1530 nm und 1580 nm auf 100 km der Übertragung kleiner als durchschnittlich 50 ps/nm ist.

## Claims

1. Dispersion-compensating optical fibre,
for a wavelength multiplexing transmission system,
said optical fibre successively comprising, from the centre towards the periphery, a core having a variable index profile then a cladding of constant index,
permitting the propagation, for a given operating spectral range greater than 30 nm, of at least one higher-order mode in addition to the LP₀₁ fundamental mode,
the index profile of the core being determined so that, for said higher mode, for said operating spectral range,
firstly, the chromatic dispersion is less than -150 ps/nm.km,
secondly, the chromatic dispersion slope is strictly negative, and
thirdly, the effective area is greater than 40µm²,
**characterised in that**
fourthly, the difference between, on the one hand, the wavelength corresponding to the overall minimum chromatic dispersion and being situated outside said operating spectral range and, on the other hand, the wavelength corresponding to the upper limit of said operating spectral range is greater than 35 nm, and
fifthly, the relative variation of the dispersion slope over said operating spectral range, that is to say the quotient between, on the one hand, the difference between the maximum chromatic dispersion slope over said operating spectral range and the minimum chromatic dispersion slope over said operating spectral range and, on the other hand, the average chromatic dispersion slope over said spectral range of operation, has an absolute value less than 30 %.

2. Dispersion-compensating optical fibre according to claim 1, **characterised in that** the index profile of the core is determined so that, for said higher mode, for said operating spectral range, the relative variation of the dispersion slope over said operating spectral range has an absolute value less than 15 %.

3. Dispersion-compensating optical fibre according to any of the preceding claims, **characterised in that** the index profile of the core is determined so that, for said higher mode, for said operating spectral range, the difference between, on the one hand, the wavelength corresponding to the overall minimum chromatic dispersion and being situated outside said operating spectral range and, on the other hand, the wavelength corresponding to the upper limit of said operating spectral range is greater than 50 nm.

4. Dispersion-compensating optical fibre according to any of the preceding claims, **characterised in that** the index profile of the core is determined so that, for said higher mode, for said operating spectral range, the chromatic dispersion is less than -300 ps/nm.km.

5. Dispersion-compensating optical fibre according to any of the preceding claims, **characterised in that** the higher-order mode is the LP₀₂ mode.

6. Dispersion-compensating optical fibre according to any of the preceding claims, **characterised in that** the operating spectral range is the C band from 1530 nm to 1565 nm.

7. Dispersion-compensating optical fibre according to any of claims 1 to 5, **characterised in that** the operating spectral range is the extended C band from 1530 nm to 1580 nm.

8. Dispersion-compensating optical fibre according to any of the preceding claims, **characterised in that** the index profile of the core is made up of at least four sections.

9. Dispersion-compensating optical fibre according to claim 8, **characterised in that** the variable index profile of the core is successively made up, from the centre towards the periphery,
of a central section having a maximum index higher than the index of the cladding,
of a first peripheral section having a maximum index lower than the index of the central section,
of a second peripheral section having a maximum index lower than the index of the central section, and
of a third peripheral section having a maximum index lower than the index of the central section.

10. Dispersion-compensating optical fibre according to claim 9, **characterised in that** the maximum index difference, in absolute value (Δn₁), between the index of the central section and the index of the cladding is between 20.10⁻³ and 35.10⁻³, and **in that** the external radius (r₁) of the central section is between 3µm and 5µm.

11. Dispersion-compensating optical fibre according to any of claims 9 to 10, **characterised in that** the absolute value of the index difference (|Δn₂|) between the index of the first peripheral section and the index of the cladding remains less than 5.10⁻³, and **in that** the external radius (r₂) of the first peripheral section is between 6 µm and 11µm.

12. Dispersion-compensating optical fibre according to any of claims 9 to 11, **characterised in that** the absolute value of the index difference (|Δn₃|) between the index of the second peripheral section and the index of the cladding remains less than 5.10⁻³, and **in that** the external radius (r₃) of the second peripheral section is between 8µm and 15µm.

13. Dispersion-compensating optical fibre according to any of claims 9 to 12, **characterised in that** the index difference (Δn₄) between the index of the third peripheral section and the index of the cladding remains between 0 and 8.10⁻³, and **in that** the external radius (r₄) of the third peripheral section is between 10 µm and 17µm.

14. Dispersion-compensating optical fibre according to any of claims 1 to 7, **characterised in that** the index profile of the core is made up of at least five sections.

15. Dispersion-compensating optical fibre according to any of claims 1 to 7, in that the variable index profile of the core is successively made up, from the centre towards the periphery,
of a central section having a maximum index higher than the index of the cladding,
of a first buried section having a minimum index lower than the index of the cladding,
of a first annular section having a maximum index higher than the index of the cladding and lower than the maximum index of the central section,
of a second buried section having a minimum index lower than the index of the cladding, and
of a second annular section having a maximum index higher than the index of the cladding and lower than the maximum index of the central section.

16. Dispersion-compensating optical fibre according to claim 15, **characterised in that** the maximum index difference, in absolute value (Δn₁), between the index of the central section and the index of the cladding is between 23.10⁻³ and 35.10⁻³, and **in that** the external radius (r₁) of the central section is between 3 µm and 4.5µm.

17. Dispersion-compensating optical fibre according to any of claims 15 to 16, **characterised in that** the index difference (Δn₂) between the index of the first buried section and the index of the cladding remains between -8.10⁻³ and 0, and **in that** the external radius (r₂) of the first buried section is between 4.5µm and 7.5µm.

18. Dispersion-compensating optical fibre according to any of claims 15 to 17, **characterised in that** the index difference (Δn₃) between the index of the first annular section and the index of the cladding remains between 2.10⁻³ and 8.10⁻³, and **in that** the external radius (r₃) of the first annular section is between 6 µm and 11µm.

19. Dispersion-compensating optical fibre according to any of claims 15 to 18, **characterised in that** the index difference (Δn₄) between the index of the second buried section and the index of the cladding is between -8.10⁻³ and 0, and **in that** the external radius (r₄) of the second buried section is between 10 µm and 15µm.

20. Dispersion-compensating optical fibre according to any of claims 15 to 19, **characterised in that** the index difference (Δn₅) between the index of the second annular section and the index of the cladding remains between 0 and 10.10⁻³, and **in that** the external radius (r₅) of the second annular section is between 13µm and 17µm.

21. Dispersion-compensating optical fibre according to any of the preceding claims, **characterised in that** said dispersion-compensating optical fibre has an attenuation lower than 1.5 dB/km at a wavelength of 1550 nm.

22. Chromatic dispersion-compensating module, **characterised in that** said module (3) comprises a dispersion-compensating optical fibre (4) according to any of the preceding claims.

23. Chromatic dispersion-compensating module according to claim 22, **characterised in that** said module (3) successively comprises, in series, a first mode converter (2) capable of converting the fundamental mode into the higher-order mode, said dispersion-compensating optical fibre (4) and a second mode converter (5) capable of converting the higher-order mode into the fundamental mode.

24. Wavelength multiplexing optical fibre transmission system, **characterised in that** said system successively comprises, in series, a line optical fibre (1) and a compensating module (3) according to any of claims 22 to 23.

25. Wavelength multiplexing optical fibre transmission system according to claim 24, **characterised in that** the ratio between the length of the line optical fibre (1) and the length of the dispersion-compensating optical fibre (4) is substantially the inverse of the absolute value of the ratio between the chromatic dispersion of the line optical fibre (1) at a wavelength of 1550 nm and the chromatic dispersion of the dispersion-compensating optical fibre (4) at a wavelength of 1550 nm.

26. Wavelength multiplexing optical fibre transmission system according to any of claims 24 to 25, **characterised in that** the cumulative chromatic dispersion, in absolute value, for each wavelength between 1530 nm and 1565 nm is less than 30 ps/nm on average over 100 km of transmission.

27. Wavelength multiplexing optical fibre transmission system according to any of claims 24 to 25, **characterised in that** the cumulative chromatic dispersion, in absolute value, for each wavelength between 1530 nm and 1580 nm is less than 50 ps/nm on average over 100 km of transmission.
